# EUROPEAN PATENT SPECIFICATION

(11) **EP 0 555 683 B1**
(45) Date of publication and mention of the grant of the patent: **11.11.1998**
(21) Application number: 93101100.1
(22) Date of filing: 25.01.1993
(51) Int. Cl.: G07F 17/32, G07F 7/00

(54) **System using intelligent cards for the electronic management and control of automatic recreation and games apparatus and of discotheques and games and recreation rooms in general**
System mit Chipkarten zur elektronischen Verwaltung und Kontrolle von Spiel- und Freizeitautomaten und von Diskotheken und Spiel- und Freizeiträumen im allgemeinen
Système utilisant des cartes intelligentes pour la gestion et la commande électronique des appareils automatiques de jeu et de récréation et des discothèques et salles de jeu et de récréation en général

(30) Priority: 13.02.1992 IT UD920019
(43) Date of publication of application: 18.08.1993
(73) Proprietor: CABALIA INTERNATIONAL S.A., Nassau (BS)
(72) Inventor: Iulita, Luigi, I-33100 Udine (IT); Tonizzo, Dino, I-33050 Rivignano (UD) (IT); Andri, Daniele, I-33030 Roveredo di Varmo (UD) (IT)
(74) Representative: Petraz, Gilberto Luigi

(56) References cited:
- EP-A- 360 613
- EP-A- 387 972
- WO-A-88/01818
- WO-A-91/09369
- DE-A- 3 435 697
- DE-A- 3 441 518
- DE-A- 3 802 186
- DE-U- 8 805 643
- GB-A- 2 140 953
- GB-A- 2 241 098

## Description

This invention concerns a system using intelligent cards for the electronic management and control of automatic recreation and games apparatus and of discotheques and games and recreation rooms in general, as set forth in the main claim.

To be more exact, the invention concerns a management and control system structured with several operational categories and suitable to control and manage games and recreation rooms for entertainment purposes in general.

This system is based on the use of programmable intelligent cards able to provide services differentiated to suit the operating category of the person using the cards.

The system according to the invention is advantageously, but not only, properly employed to manage and control public premises such as slot machine rooms, casinos, discotheques, etc.

The development of electronic technology during recent years has led to an ever higher level of integration of microelectronic circuits and has enabled intelligent devices to be obtained which are capable of an almost limitless operating potentiality and capacity.

One application of this technology consists in the creation of the so-called intelligent card, in which the traditional magnetic band has been replaced by a semiconductor memory chip with an attached control and processing logic incorporated in the body of the card itself.

The work of reading and writing the data can take place electrically by means of suitable contacts on the surface of the card or, according to recent technical developments, magnetically by incorporating in the plastic body of the card a winding which acts as a magnetic-electrical transducer.

The lack of contact reduces wear and deterioration of the reader and card in this case and ensures a much greater efficiency and much longer life of the same than with conventional magnetic cards.

The "degree of intelligence" which can be determined for these cards may be varied. For instance, the cards embodying a device with an EPROM memory (a memory which can be altered only once) or with an EEPROM memory (a memory which can be altered many times) differ substantially from the common cards with a magnetic band only owing to their ability to obtain a greater capacity of memory and to the substantially economical nature of the type of reader required as compared to the corresponding reader of cards with a magnetic band.

The situation is very different when the EEPROM memory incorporated in the card is associated with a microprocessor control logic able to receive instructions and to process data, that is to say, able to converse with the exterior so as to provide a user with a plurality of services.

Among the various capabilities provided by those intelligent devices there may be included a differentiated access to various areas of memory protected by codes stored within the card itself.

Moreover, an intrusion-prevention system can be prearranged which leads to self-destruction of the card in the event of a given number of wrong attempts to write the secret code.

These intelligent cards are widely used in systems for payment and for management of personal information, such as electronic hospital files, identification documents, codifying of signatures, that is to say, in all cases where the security aspect is especially important.

Another very promising field of use is the distribution, management and control, of a vertical type at several levels, of structures consisting of various points of use which may be centred upon one single coordinating and controlling directional centre.

The state of the art covers various systems for the use of automatic machines, mainly for games rooms, by employing microprocessor intelligent cards.

EP-A-0387972 discloses a method of use of automatic machines by means of recording media with microprocessor cards, whereby the-recording media enable and pre-arrange the machine for the storage of data which affect the operating sequence of the machine or affect the emission and/or display of data relating to the present operating conditions or conditions recorded previously.

Document EP-A-0 360 613 shows a game machine transfer system which uses a microprocessor card including memory means for recording and transfering operational data of a game machine to a central data processor. No mention is made of a differentiated and hierarchical accounting control based on specific cards of a differentiated level.

A system according to the preamble of Claim 1 is known from documents EP-A-0 387 972 and EP-A-0 360 613.

Document GB-A-2 140 953 relates to a fruit machine with a printout device which is arranged to print out different categories of machine information in dependence on the identity of the person controlling it. No hint is provided concerning a hierarchical sub-division whereby various levels of responsibility, with the relative cards, can correspond to different levels of access to areas of accounting memory.

DE-A-3.441.518 shows a diagram of the use of automatic machines by intelligent cards in games rooms, whereby the card is programmed and initialised by a recorder-reader and whereby the automatic machines and the recorder-reader exchange information with a central processing unit, which records, controls and manages the use of these automatic machines.

These documents together with DE-A-3.435.697 and GB-A-2,241,098, amongst others, provide substantially only one type of microprocessor card intended for the user of automatic machines.

The known systems, therefore, do not provide a hierarchical structure which makes possible, by means of individual and differentiated intelligent cards, the management and control of the work of all the users and staff such as cashiers, barmen, etc., and of the managers of branches of the establishment in which the automatic machines are present.

Moreover, the documents of the state of the art do not provide for the ability of making the chain of distribution of the automatic machines unmistakable, whereby such an unmistakable condition can enable only a pre-determined recipient to use the machine along all the stages of this distribution chain.

The present applicants have studied, tried and realized this invention so as to overcome all the shortcomings of the state of the art and to achieve further advantages.

This invention is set forth and characterized in the main claim, while the dependent claims describe variants of the idea of the main solution.

The purpose of the invention is to provide a management and control system advantageously, but not only, for public premises or recreation places, which may be slot machine rooms, casinos, sports clubs, discotheques, gymnasia, bars, restaurants and shops in general by the use of intelligent microprocessor cards.

The system provides for the use, distribution, management and control of a plurality of programmable operational machines, access to which is permitted only by inserting a specific intelligent card.

Each intelligent card is provided with identification codes which identify unmistakably the type of plant to which the operational machines belong, the type of intelligent card, the user of the card, the machines which can be accessed, etc.

The intelligent card enables information to be exchanged and recorded between the machine and the user of the card so as to permit the use and management of the activity of the machine itself or else a check on the actions of the users.

The system is structured with a plurality of categories, with each of which is associated an intelligent card having differentiated capabilities.

The operational categories with which the system is structured may be identified substantially as follows: customer category, staff category (cashier, barman, etc.), controller category (possibly with several levels of authority), distributor category (also possibly with several levels of authority).

A further function may be carried out by a programmer, who sets the working parameters on all the operational machines and is able to change those parameters on the basis of instructions received or changed working conditions.

Each of those categories has an intelligent card programmed to enable its user to perform certain functions but not others, or to permit access to differentiated areas of memory and/or machine, and to enable the holder of the card to use given machines but not others, according to the internal coding of the card itself and/or of the machine itself.

Interaction between the card and the operational machine may take place in different ways. For instance, if the operational machine is a videogame machine, the games played by the user can be debited individually on his card, thus recording all the games on the internal memory of the card itself, in this case a customer card.

Debits can be paid in cash or credits, each credit having a defined or definable equivalent in cash.

According to a variant only the remaining credit at the end of the game may be recorded on the customer card, thus reducing the number of operations and therefore the total capacity and capacity used of the memory employed.

According to a further variant, before performing the game it is possible to set directly on the machine, by means of suitable pulse devices or by a keyboard, the amount of the credit which it is desired to use on the operational machine, which will actuate itself and function until that credit is used up.

The customer-category card can be used, for instance, to obtain access to the premises. In this case a great variety of parameters can be set on it such as, for instance, access permitted to one or more persons, access permitted on given days of the week and not on other days, differentiated fees and discounts on the basis of the holder of the card, and so on.

The customer cards can therefore be classified according to several categories, depending on the level of importance of the holder of the card.

The system includes machines, for instance automatic loaders, for any reloading of exhausted customer cards, the card being credited with the value of the money introduced.

The same automatic loaders may supply tokens or analogous means, after insertion of the money or the card, so as to enable those operational machines to be used which are actuated with the tokens or analogous means.

The automatic loaders can also supply new customer cards.

The function of initialising, loading and debiting the cards or collecting money from a customer may be performed not only by automatic loaders but also analogously by an accounting machine manned by actual members of the staff. These members, such as cashiers, are provided with a card of a suitable staff category with identification codes to identify the person and the machine.

Access to the accounting machines or automatic loaders is permitted only after insertion of staff-category cards.

This method identifies unmistakably the staff member who has carried out the operation which is recorded by the machine.

The operations can be recorded also on the card of the staff member to enable the staff member to prove the action performed.

For more practical working, access to the accounting machines can be permitted also by means of a key with which the cashiers are provided as an alternative to the card.

In given cases a manager category card is provided immediately above the staff category card. This manager category card, held by the owner of the premises for instance, allows access to the areas of memory of the individual apparatuses, such as accounting machines, videogames, automatic drink dispensing machines, etc., for a check of the activity and use of those apparatuses.

The manager category card also makes possible a check on the activity of the individual staff members, such as cashiers for instance.

The manager category card also permits display of data for checking purposes but without allowing access for making changes.

With the system structured according to the invention it is possible for enabled controllers to check the work of all the staff by periodical and general controls.

The controllers are provided with intelligent cards of a suitable controller category which enable them to have access to areas of memory of the operational machines; these areas of memory may be accessed in differentiated ways according to the category of authority of the controller. These areas of memory cannot be accessed with intelligent cards of a category other than that of a controller.

An area of memory may contain, for instance, partial accounting information of a period, which can be accessed by controllers belonging to a lower category of authority.

A controller, by means of his card of a controller-category provided with an identification code, may have access to that area of memory to carry out periodical checks on the work of the staff.

After the check that partial area of memory can be set to zero and pre-arranged for the recording of the operations of the next period.

A higher category of authority is permitted to have access to a different area of memory in which are recorded the general accounts.

This higher category of authority is therefore permitted to perform a check and control on the activity of customers, staff and controllers of a lower category besides the management and control of the operational machines.

These cards of a controller category are held typically by the owner of the premises or by the zone manager in the event of a structure equipped with several premises spread in the territory and forming part of one single management unit.

A further category which the invention includes is the programmer category. This category is permitted to modify the parameters of use of the operational machines, the parameters of exchange of moneys and the amounts in general for games, admissions, consumption of food and drinks, etc. to be debited to customer-category cards.

This function is obtained after having programmed the programmer-category card, on the accounting machine for instance, and after having made this card interact thereafter with the operational machines, automatic loader, etc.

This programmer-category card enables all the identification codes of the plant including those machines to be transferred to those machines.

According to a variant the controller-category cards are enabled to perform the functions of the programmer-category card.

According to another variant the higher controller-category card alone is enabled to perform the functions of the programmer-category card.

Where the chain of distribution of the machines includes a plurality of intermediate stages from the manufacturer downwards, such as retailers, leasers, branch managers, etc., a differentiated internal coding for these machines is provided so as to permit access only by appointed recipients. In other words, the manufacturer, when he distributes the machines to various sales points, such as resellers, franchise holders, etc., provides the machine with a code so as to identify the reseller unmistakably and to permit use of those machines only by the appointed reseller.

The reseller in turn gives a code to the machines so as to identify unmistakably the customer/manager to whom the machines are sent.

The customer/manager can apply a new code to identify the individual places of use to which the machines are apportioned.

Each machine therefore has its own internal code, which makes impossible the use of the cards outside the premises which have initialized the cards and have provided them with all the identification codes, except where so desired at one or more levels of the distribution chain.

It is clear from the above disclosure that manifold variants can be applied to the idea of the solution of the invention to enable the invention to be used in various fields of application.

A possible lay-out of this control and management system according to the invention is set forth in the description that follows.

The attached diagrams show a non-restrictive example:
- Fig.1: is a diagram of the use of a customer-category card;
- Fig.2: is a diagram of the use of a staff-category card;

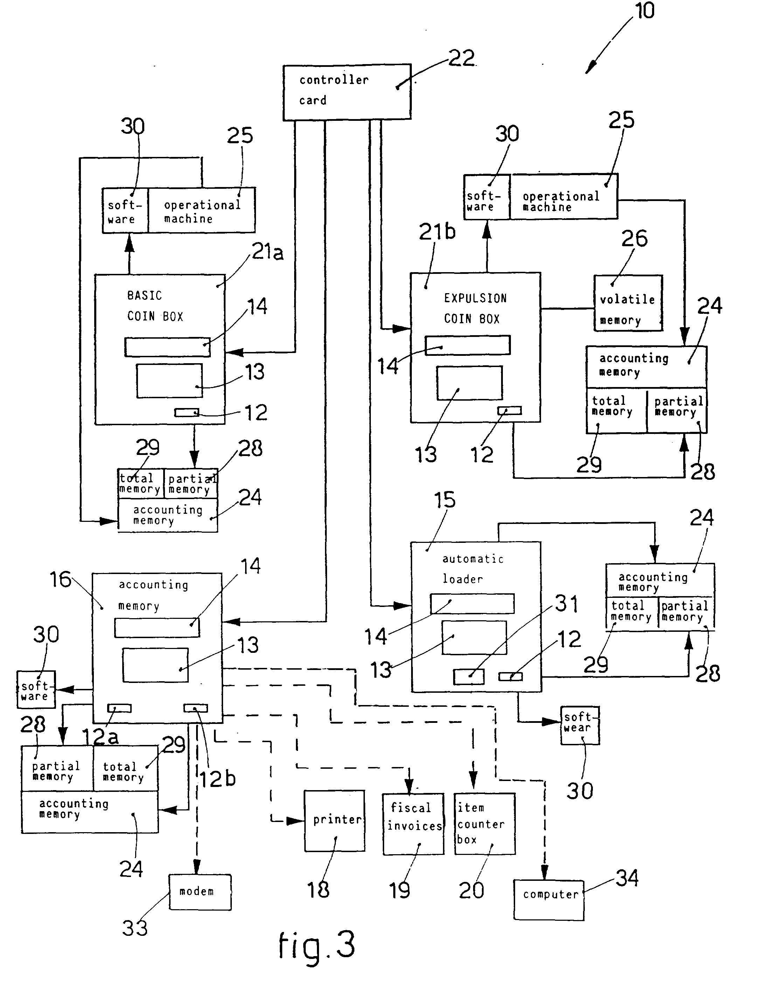

- Fig.3: is a diagram of the use of a controller-category card of a low category of authority;

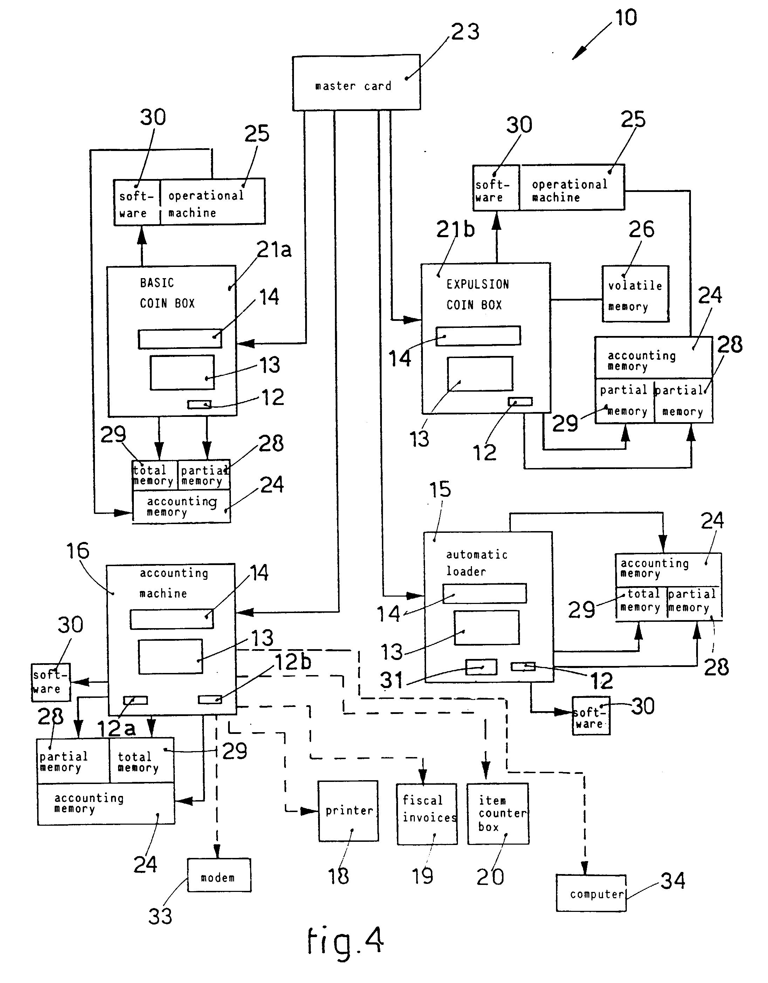

- Fig.4: is a diagram of the use of a controller-category card of a high category or master category, of authority;
- Fig.5: is a diagram of the use of a programmer-category card;
- Fig.6: is a possible diagram of the distribution chain of the electronically controlled machines according to the invention.

In the figures the reference number 10 indicates a possible structure consisting of a plurality of machines having an electronic control and able to be accessed in differentiated ways according to the category of a user's card.

The description in this case has been drawn up for machines such as videogame machines or analogous types, but the machines could likewise consist of drinks dispensing machines, electronic machines permitting access to premises, that is to say, substantially any kind of machine for the automatic distribution of various goods and/or services.

Each machine is equipped with at least one reader 12 to identify and read the card, a keyboard 13 to set the functioning data and values and possibly at least one display 14, which enables a user to read the data set or the data processed by the generic machine.

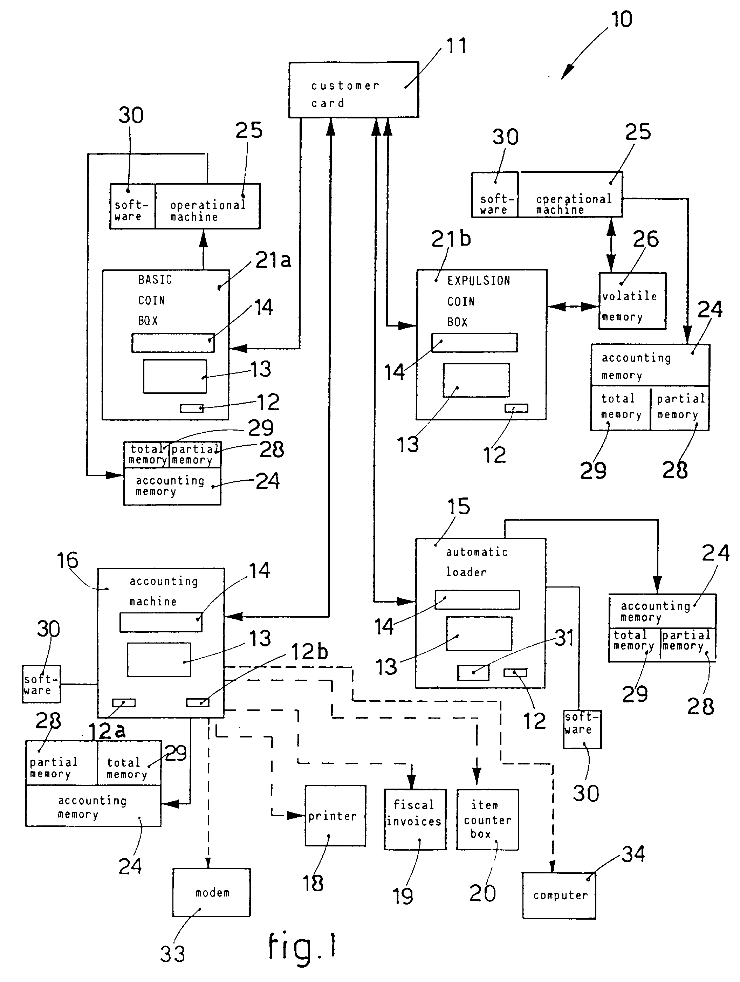

Fig.1 shows the possible functions accessible to a generic user of an intelligent card of a customer category 11.

By means of an automatic loader 15 the user can introduce money and become credited with the corresponding amount on his customer-category card 11.

According to a variant the automatic loader 15 functions also as a money changer.

In this example the automatic loader 15 supplies tokens or other analogous means by means of a slot 31; in this way it is possible to use prearranged operational machines 25 or usage points which require such tokens or means (gambling tables, roulette, etc.) by paying corresponding sums in money or by debiting the customer's card 11, which is suitably inserted into the automatic loader 15.

Alternatively a new customer card 11 can be initialised, loaded or renewed at an accounting machine 16.

The customer card 11 is provided with a progressive customer identification number, which can be opened and set to zero.

Each accounting machine 16 has a member of the staff or cashier, three of them in this example, who enables the accounting machine 16 to function by inserting his relative staff-category card 17.

The accounting machine 16 includes a reader 12, in which is first inserted the staff-category card 17 to identify the member of the staff and thus to enable the accounting machine 16 to work; thereafter the customer-category card 11 is inserted for all the possible operations of crediting, debiting or initialising.

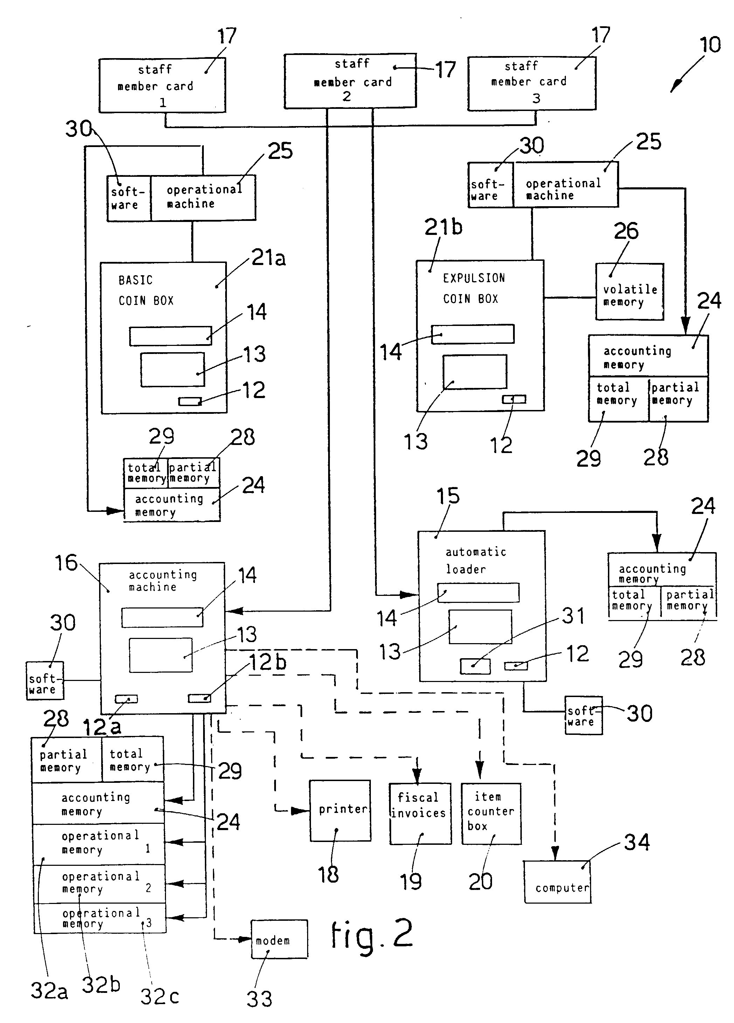

According to the variant shown in Fig.2 the accounting machine 16 has two readers 12a and 12b respectively for identification of the intelligent cards.

The reader 12a is used for insertion of the staff-category card 17, which remains inserted during all the operations performed by that member so as to identify the relative staff member unmistakably and to enable the latter to use the accounting machine 16. This identification enables all the operations to be attributed to a given staff member, thus making possible a control of the accounting and an allotment of responsibility in the event of mistakes or omissions.

When the accounting machine 16 has thus been enabled to function and the staff member has been identified, the customer's card 11 is inserted into the second reader 12b for any crediting of sums paid or for debiting of drinks or food consumed, use of machines, etc.

According to a variant the accounting machine 16 is equipped with two displays 14, one of which faces the customer, who can thus check the correctness of the operations of the relative staff member.

The staff-category card 17 permits access also to the automatic loader 15, for drawing money for instance.

In this case too the unmistakable identification of the staff member by means of his staff-category card 17 enables every operation to be recorded and attributed to that staff member.

For more practical working, the functions performed by the staff-category card 17 can also be carried out, according to a variant, by a key which enables the accounting machine 16 to be operated.

One key can be provided for each accounting machine 16 or, according to a variant, the same key, held by the manager of the premises for instance, permits access to all the accounting machines 16.

A further operational category identified by a suitable manager category card, which is not shown in the diagrams of the figures, is provided for an immediate check on the activities of the staff members. This manager category card is held by the person enabled to manage directly the premises and the machines therein; this person supervises and is responsible for the activities of the members of the staff.

The manager category card permits access to the machines, and to the accounting machines 16 in particular, so as to check the accounts and the correct working of the users and allows only the display of the same but not any change of data memorized in the machines.

Money equivalent to the remaining credit on the customer's card 11 can be paid to the customer by means of the accounting machine 16 if the customer requires his card 11 to be brought to zero.

The accounting machine 16 cooperates with printing means of a known type such as, for instance, a printer 18, a device to issue fiscal invoices 19 or an item-counter device 20 which provides a graphical record of sums paid or received.

According to a variant interface devices with a modem 33 or computer 34 are also associated with the accounting machines 16 so as to transmit data relating to the activity of the accounting machines 16 at work to suitable control centres within or outside the premises.

Each operational machine 25 is equipped with a coin box 21 for use of the operational machines 25 by customers.

In this case the coin box 21 may be of two types, a basic type 21a and an expulsion type 21b respectively. The basic coin box 21a receives the customer's card 11, reads its contents and debits the amount of each single game or use in general, debiting each single operation in sequence on the card itself 11. At the end of use of the operational machine 25 the basic coin box 21a returns the customer's card 11 with the remaining amount in credit.

The expulsion type coin box 21b interacts with the customer's card 11 inserted into the reader 12 of the coin box 21b only at the beginning and end of use of the relative operational machine 25.

Each single operation is recorded on a volatile memory 26 within the operational machine 25; this memory 26 records the amount corresponding to all the games played by the customer. At the end of use of the operational machine 25 the volatile memory 26 transfers the final data to the customer's card 11, debits the amount used and is initialized for the next customer.

According to a variant the amount which a given customer desires to use on an operational machine 25 is set directly on the customer's card 11 by suitable pulse-type pushbuttons, a keyboard or analogous devices; when this amount has been used up, the machine 25 is disactuated.

In special cases such as the game of billiards or other games on a time basis the coin boxes 21 are associated with known counting means which enable the credits on the intelligent cards to be reduced after given periods of playing that game.

Each operation and use of an operational machine 25 and of the accounting machine 16 or automatic loader 15 are recorded in an accounting memory 24, which in this case is structured in two areas of memory, namely an area of partial memory 28 and an area of total memory 29.

According to a variant each accounting machine 16 is provided with further areas of memory 32a, 32b and 32c respectively, one area for each staff member enabled to use the accounting machine 16; the operations of each single staff member are recorded in these memories 32a-32b-32c.

Each area of memory 32 can be accessed by recognition of the identification code of the staff member. The staff member at the end of his work can accede to his own specific area of memory 32 to carry out an accounting check of his work and to set the memory to zero.

The control and management of the whole system 10 can be ensured by access to these areas of memory by means of controller-category cards.

This control is carried out advantageously at a higher level of the chain of distribution of these apparatuses, for instance at the level of a manager of several premises or of a person in charge of the zone, who supplies the apparatuses to a plurality of usage points.

The controller category in turn can be structured with a plurality of categories, which in this example are a partial or periodical controller category and a general or master controller category. These operational categories alone are enabled to access the area of accounting memory 24.

By means of cards of the partial controller category 22 it is possible to access the area of partial memory 28, in which are recorded all the operations carried out on a given machine within a defined period.

When the control has been performed, the area of partial memory 28 is set to zero and is initialised to record the operations of the next period.

By means of master controller cards 23, instead, access can be made to an area of memory 29 which records all the information over a longer period of time, the duration of which can be set as desired.

By means of these master cards 23 it is therefore possible to control the activity of each single machine and each single user, whether a customer, staff member or controller.

The controller-category card 22 and master-category card 23 make it possible, possibly to differentiated degrees according to the category of authority, to act to modify parameters, amounts and values of the functioning of each single machine of the system 10. In fact, the above cards 22 and 23 permit direct access to the software of the functioning 30 of each operational machine 25 and of the automatic loader 15 and accounting machine 16 so as to modify the characteristics of functioning of the same by the direct setting of data.

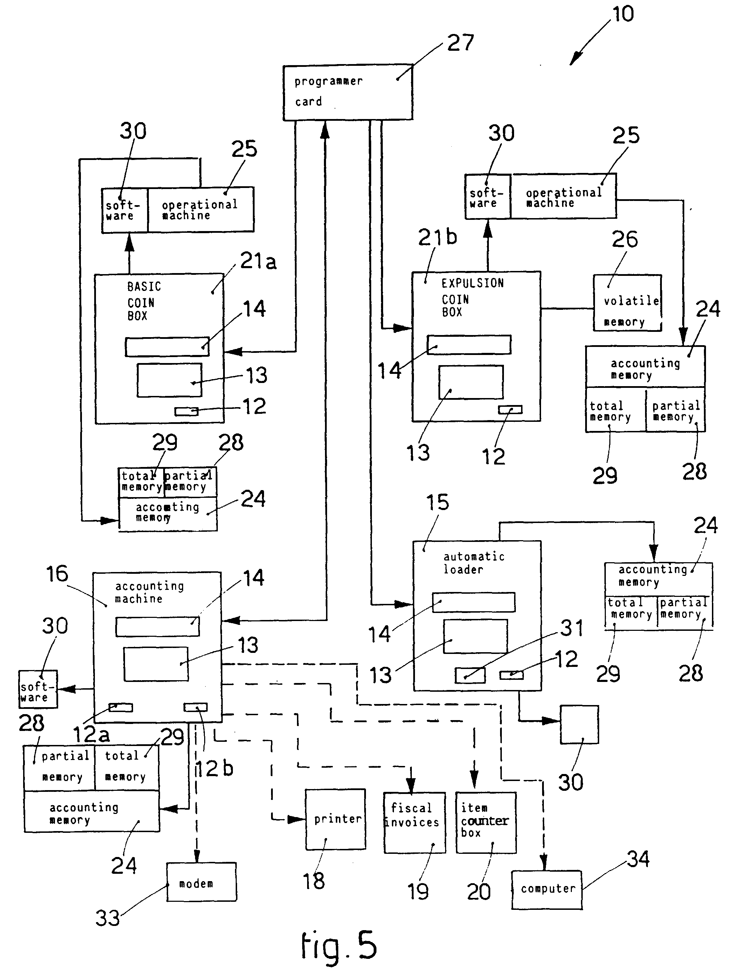

This latter function can also be performed in another operational category such as the category equipped with programmer cards 27 (Fig.5). These programmer-category cards 27 are enabled to modify the parameters and characteristics of functioning of all the machines with an electronic control which form part of the system 10 and to transfer the codes of identification of the machine. In this case, however, this ability can be actuated only after the programming of the programmer card 27 at the accounting machine 16.

In this way a further control of the work of each user of these programmer cards 27 is provided by the recording of every operation in the memory of the generic machine actuated.

At higher levels in the chain of distribution of the machines, such as zone resellers, area resellers, etc. up to the actual manufacturer, specific coding categories may be included with relative programmable coded cards, which enable only the appointed recipients to use the machines.

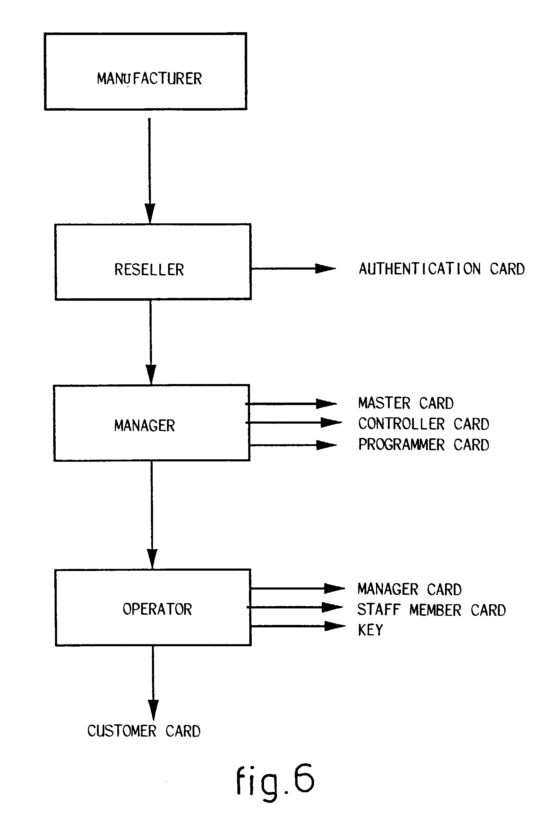

A diagram of a possible distribution chain is shown in Fig.6. In this example the manufacturer makes and sells the operational machines 25 and provides them at the time of their production with a differentiated unmistakable machine code on the basis of the reseller who is to receive the specific operational machines 25.

The reseller, by means of an appropriate authentication card which he holds, applies a further coding of the machine 25 differentiated on the basis of the manager, for instance a person in charge of the zone or area, to whom the machines 25 are to be sent. This manager typically holds controller category cards, such as a master card 23 or controller card 22, and the programmer category card 27 described earlier.

The manager in turn applies an internal coding to the machine; this code will differ according to the operating premises for which the machines 25 are intended.

The manager cards, staff-category cards and possibly the key for access to the accounting machines are intended for the operating level. This level will also be able to initialise and issue customer cards 11.

Where several premises are controlled by one single manager, it will be possible to change the coding of the intelligent cards so as to enable the holder of a card already coded for given specific premises to accede to other premises with the same card when the other premises are controlled by the same manager.

Besides the codes identifying the holders and all the information relating to the specific use of the card, each intelligent card therefore contains within it all the codes referring to the distribution chain shown in Fig.6.

In this way the responsibility for improper use of the operational machines 25 falls upon the next higher level of the distribution chain.

## Claims

1. System for the electronic management and control of games rooms and recreation rooms comprising a plurality of operating machines (25), each of which operating machines (25) being equipped with a card reader (12) able to recognize the code carried on the said card and to allow use of and/or access to the machine, and to carry out functions of memorization of the operations carried out on said machine, the system being characterised in that the memorization functions of the operations of each operating machine (25) are carried out on at least two differentiated levels corresponding to two differentiated accounting areas of memory, respectively partial memory (28), or short term memory, and total memory (29), or long term memory, of the internal memory (24) of the operating machine (25), each operation carried out on the operating machine (25) being recorded in both memories and attributed personally and univocally to the user who carried out the operation, by means of reading the code on the relative card, the cards defining at least the category of client (11), staff member (cashier, barman etc.) (17) and at least two other categories, respectively first and second, for accounting controllers (22, 23), the first category of accounting controllers (22) having access, with the relative card, only to the area of partial memory (28) of the internal memory (24) of the operating machine (25), the second category of accounting controllers (23) having access, with the relative card, both to the area of partial memory (28) and to the area of total memory (29) of the internal memory (24) of the operating machine.

2. System as in Claim 1, which comprises at least an accounting machine (16) to manage the money by means of which client cards (11) are initialised, the accounting machine (16) being able to be activated only after the specific operator level card (17) has been inserted, with the consequent recognition of the staff member and the personalised recording in the internal memory (24) of the accounting machine (16) of all the operations carried out, the internal memory (24) of the accounting machine (16) being structured in specific areas of memory (32a, 32b, 32c) in each of which the operations carried out by a single operator are recorded by means of reading the code on the relative card.

3. System as claimed in any claim hereinbefore, whereby the customer card (11) cooperates with a basic coin box (21a) by interaction therewith and records operations as a progressive factor.

4. System as claimed in any claim hereinbefore, whereby the customer card (11) cooperates with an expulsion coin box (21b) by partial or total discharge of credits/money and reimmission of the remainder thereof at the end of use of the operational machine (25).

5. System as claimed in any claim hereinbefore, whereby the customer card (11) cooperates with an accounting machine (16) for initialisation of the card (11), the crediting of credits/money and for at least partial repayment of the remaining credit.

6. System as claimed in any claim hereinbefore, whereby the customer card (11) cooperates with an automatic loader (15) for the crediting of credits/money.

7. System as claimed in any claim hereinbefore, whereby the customer card (11) cooperates with an automatic loader (15) in the function of exchanging money.

8. System as claimed in any claim hereinbefore, whereby the controller card (22) cooperates with the coin boxes (21), whether of a basic (21a) or expulsion (21b) type, and with the accounting machine (16), by itself or including an automatic loader (15), in the reading of the relative partial memory (28).

9. System as claimed in any claim hereinbefore, whereby the controller card (22) cooperates with the software (30) of the functioning of the operational machines (25), of the accounting machine (16) and of the automatic loader (15) in the direct modification of the parameters of use.

10. System as claimed in any claim hereinbefore, whereby the staff member card (17) cooperates with the accounting machine (16) in the typical functions of the accounting machine (16) and operates on its accounting memory (32) besides a partial memory (28) and total memory (29).

11. System as claimed in any claim hereinbefore, whereby the staff member card (17) cooperates with the automatic loader (15) in the drawing of money.

12. System as claimed in any claim hereinbefore, whereby the programmer card (27) cooperates with the software (30) of functioning of the accounting machine (16) in the changing of the parameters of the factors of use of the accounting machine (16), of the automatic loader (15) and of the operational machines (25).

13. System as claimed in any claim hereinbefore, whereby the programmer card (27) takes from the software (30) of the accounting machine (16) the factors of changing the parameters of the automatic loader (15) and coin boxes (21) and acts to change the parameters of the software (30) of functioning of the automatic loader (15) and of the operational machines (25) by mere insertion in the specific readers (12).

14. System as claimed in any claim hereinbefore, whereby the master card (23) cooperates with the accounting machine (16), automatic loader (15) and coin boxes (21) in taking action on the total accounting memories (29).

15. System as claimed in any claim hereinbefore, whereby the master card (23) cooperates with the software (30) of functioning of the operational machines (25), accounting machine (16) and automatic loader (15) in the direct modification of the parameters of use.

16. System as claimed in any claim hereinbefore, whereby a manager card is included at a level immediately above that of the staff member card (17).

17. System as claimed in any claim hereinbefore, whereby the manager card makes possible the display of the partial (28) and total (29) areas of accounting memory but does not permit changes of the data in those areas (28-29).

18. System as claimed in any claim hereinbefore, in which each level in the chain of distribution of the automatic machines (25) and accounting machines (16) is characterized by an internal coding of each of the automatic machines (25) and intelligent cards of each category so as to identify unmistakably the appointed recipient of the automatic machines (25) and accounting machines (16) and to enable only that appointed recipient to access those machines.

## Patentansprüche

1. Elektronisches Führungs- und Überwachungssystem für Spielsäle und Lokale, das mehrere Arbeitsmaschinen (25) umfaßt, wobei jede Arbeitsmaschine (25) mit einem Kartenleser (12) versehen ist, der geeignet ist, den auf dieser Karte übertragenen Code zu erkennen, die Verwendung der Maschine und/oder den Zugang zu dieser Maschine zu gestatten und die mit diesen Maschinen durchgeführten Operationen zu speichern, **dadurch gekennzeichnet**, daß die Speicherung der Operationen jeder Maschine (25) auf mindestens zwei unterschiedenen Ebenen durchgeführt wird, wobei diese Ebenen zwei unterschiedenen Rechnungsspeichergebieten - d. h. einem Teilspeicher (28) oder Kurzspeicher bzw. einem Gesamtspeicher (29) oder Langspeicher des Innenspeichers (24) - der Arbeitsmaschine (25) entsprechen, wobei jede von der Arbeitsmaschine (25) durchgeführte Operation in beiden Speichern eingetragen wird und durch das Lesen des Codes der entsprechenden Karte dem Anwender, der diese Operation durchgeführt hat, eindeutig zugeschrieben wird, wobei diese Karten mindestens eine Kundenebene (11), eine Bedienungsebene (Kassierer, Barmann, usw.) (17) und mindestens zwei Rechnungskontrollebenen (22, 23) (d. h. eine erste bzw. eine zweite Rechnungskontrollebene) bestimmen, wobei die erste Rechnungskontrollebene (22) mit der entsprechenden Karte nur zum Gebiet des Teilspeichers (28) des Innenspeichers (24) der Arbeitsmaschine (25) Zugang hat und die zweite Rechnungskontrollebene (23) mit der entsprechenden Karte sowohl zum Gebiet des Teilspeichers (28) als auch zum Gebiet des Gesamtspeichers (29) des Innenspeichers (24) der Arbeitsmaschine (25) Zugang hat.

2. System nach Anspruch 1, **dadurch gekennzeichnet**, daß es mindestens eine Kasse (16) zur Geldführung umfaßt und durch diese Kasse (16) die Kundenebenenkarten (11) initialisiert werden, wobei diese Kasse (16) nur nach dem Einsetzen der besonderen Bedienungsebenenkarte (17) mit entsprechender Erkennung des Bedieners und mit Eintragung sämtlicher durchgeführten Operationen im Innenspeicher (24) der Kasse (16) betätigt werden kann, wobei der Innenspeicher (24) der Kasse (16) in besonderen Speichergebieten (32a, 32b, 32c) unterteilt ist und in jedem Speichergebiet nur die Operationen eingetragen werden, die von einem einzigen, durch das Lesen des Codes seiner Karte anerkannten Bediener durchgeführt werden.

3. System nach dem einem oder dem anderen der vorhergehenden Ansprüche, **dadurch gekennzeichnet**, daß die Kundenkarte (11) mit einem Grundmünzenautomat (21a) interaktiv zusammenwirkt, wobei die Operationen als Progressivfaktor eingetragen werden.

4. System nach dem einem oder dem anderen der vorhergehenden Ansprüche, **dadurch gekennzeichnet**, daß die Kundenkarte (11) mit einem Auswurfmünzenautomat (21b) durch teilweise oder völlige Entladung des Guthabens/Bargeldes und Wiedereinführung des Restbetrages zur Verwendung der Arbeitsmaschine (25) zusammenwirkt.

5. System nach dem einem oder dem anderen der vorhergehenden Ansprüche, **dadurch gekennzeichnet**, daß die Kundenkarte (11) mit einer Kasse (16) zur Initialisierung der Karte (11), zum Akkreditieren des Guthabens/Bargeldes und mindestens zur teilweisen Rückgabe des Restbetrages zusammenwirkt.

6. System nach dem einem oder dem anderen der vorhergehenden Ansprüche, **dadurch gekennzeichnet**, daß die Kundenkarte (11) mit einer automatischen Ladeeinrichtung (15) zum Akkreditieren des Guthabens/Bargeldes zusammenwirkt.

7. System nach dem einem oder dem anderen der vorhergehenden Ansprüche, **dadurch gekennzeichnet**, daß die Kundenkarte (11) mit einer automatischen Ladeeinrichtung (15) zum Wechsel des Bargeldes zusammenwirkt.

8. System nach dem einem oder dem anderen der vorhergehenden Ansprüche, **dadurch gekennzeichnet**, daß die Kontrollkarte (22) mit dem Grundmünzenautomat (21a) oder mit dem Auswurfmünzenautomat (21b) sowie mit der Kasse (16) an sich oder mit der automatischen Ladeeinrichtung (15) zum Lesen des entsprechenden Teilspeichers (28) zusammenwirkt.

9. System nach dem einem oder dem anderen der vorhergehenden Ansprüche, **dadurch gekennzeichnet**, daß die Kontrollkarte (22) mit der Betriebssoftware (30) der Arbeitsmaschinen (25), der Kasse (16) und der automatischen Ladeeinrichtung (15) zur unmittelbaren Änderung der Verwendungsparameter zusammenwirkt.

10. System nach dem einem oder dem anderen der vorhergehenden Ansprüche, **dadurch gekennzeichnet**, daß die Bedienungskarte (17) mit der Kasse (16) zur Ausübung der typischen Aufgaben der Kasse zusammenwirkt, wobei es mit einem eigenen Rechnungsspeicher (32) neben dem Teilspeicher (28) und dem Gesamtspeicher (29) arbeitet.

11. System nach dem einem oder dem anderen der vorhergehenden Ansprüche, **dadurch gekennzeichnet**, daß die Bedienungskarte (17) mit der automatischen Ladeeinrichtung (15) zur Geldabhebung zusammenwirkt.

12. System nach dem einem oder dem anderen der vorhergehenden Ansprüche, **dadurch gekennzeichnet**, daß die Programmierkarte (27) mit der Betriebssoftware (30) der Kasse (16) zum Wiederparametrieren der Verwendungsfaktoren der Kasse (16), der automatischen Ladeeinrichtung (15) und der Arbeitsmaschinen (25) zusammenwirkt.

13. System nach dem einem oder dem anderen der vorhergehenden Ansprüche, **dadurch gekennzeichnet**, daß die Programmierkarte (27) aus dem Software (30) der Kasse (16) die Wiederparametrierungsfaktoren der automatischen Ladeeinrichtung (15) und des Münzenautomates (21) entnimmt und die Betriebssoftware (30) der automatischen Ladeeinrichtung (15) und der Arbeitsmaschinen (25) durch einfaches Einsetzen in die entsprechenden besonderen Leser (12) wiederparametriert.

14. System nach dem einem oder dem anderen der vorhergehenden Ansprüche, **dadurch gekennzeichnet**, daß die Hauptkarte (23) mit der Kasse (16), der automatischen Ladeeinrichtung (15) und den Münzenautomaten (21) durch das Eingreifen in die Gesamtrechnungsspeicher (29) zusammenwirkt.

15. System nach dem einem oder dem anderen der vorhergehenden Ansprüche, **dadurch gekennzeichnet**, daß die Hauptkarte (23) mit der Betriebssoftware (30) der Arbeitsmaschinen (25), der Kasse (16) und der automatischen Ladeeinrichtung (15) zur unmittelbaren Änderung der Verwendungsparameter zusammenwirkt.

16. System nach dem einem oder dem anderen der vorhergehenden Ansprüche, **dadurch gekennzeichnet**, daß eine Führungskarte unmittelbar oberhalb der Bedienungskarte (17) vorgesehen ist.

17. System nach dem einem oder dem anderen der vorhergehenden Ansprüche, **dadurch gekennzeichnet**, daß die Führungskarte die unmittelbare Sichtbarmachung der Gebiete des Teilrechnungsspeichers (28) und des Gesamtrechnungsspeichers (29) gestattet, jedoch ohne die Änderung der in diesen Gebieten (28, 29) enthaltenen Angaben zu gestatten.

18. System nach dem einem oder dem anderen der vorhergehenden Ansprüche, **dadurch gekennzeichnet**, daß jede Ebene der Distributionskette der Arbeitsmaschinen (25) und der Kassen (16) durch eine Innenkodierung jeder Arbeitsmaschine (25) und der intelligenten Karten jeder Ebene gekennzeichnet ist, um den festgesetzten Empfänger dieser Arbeitsmaschinen (25) und dieser Kassen (16) eindeutig zu identifizieren und den Zugang zu diesen Maschinen nur diesem festgesetzten Empfänger zu gestatten.

## Revendications

1. Système de gestion et de contrôle électronique de salles de jeux et d'établissements publics comprenant une pluralité de machines opératrices (25), chacune de ces machines opératrices (25) étant pourvue d'un lecteur de cartes (12) apte à reconnaître le code indiqué sur la carte et à permettre l'utilisation et/ou l'accès à la maschine, et aussi à remplir des fonctions de mise en mémoire des opérations qui ont été exécutées sur les machines susdites, **caractérisé en ce que** les fonctions de mise en mémoire des opérations de chaque machine opératrice (25) sont remplies au moins sur deux niveaux diversifiés correspondants à deux espaces mémoire comptable diversifiés, c'est-à-dire une mémoire partielle (28) ou mémoire de courte période et une mémoire totale (29) ou mémoire de longue période respectivement, de la mémoire interne (24) de la machine opératrice (25), chaque opération exécutée sur la machine opératrice (25) étant enregistrée dans les deux mémoires et étant attribuée de façon univoque à l'utilisateur qui a exécuté l'opération même au moyen de la lecture du code de la carte correspondante, et ces cartes définissent au moins un niveau client (11), un niveau opérateur (caissier, barman, etc.) (17) et au moins deux niveaux, premier et deuxième niveau respectivement, de contrôleurs comptables (22, 23), le premier de ces niveaux de contrôleurs comptables (22) ayant accès avec la carte correspondante seulement à l'espace mémoire partielle (28) de la mémoire interne (24) de la machine opératrice (25), le deuxième de ces niveaux de contrôleurs comptables (23) ayant accès avec la carte correspondante soit à l'espace mémoire partielle (28) soit à l'espace mémoire totale (29) de la mémoire interne (24) de la machine opératrice (25).

2. Système selon la revendication 1, **caractérisé en ce** **qu'**il comprend au moins une caisse (16) pour la gestion de l'argent, par laquelle sont initialisées les cartes de niveau client (11), la caisse (16) susdite pouvant être mise en service seulement après l'insertion de la la carte spécifique de niveau opérateur (17), avec l'identification correspondante de l'opérateur préposé et l'enregistrement dans la mémoire interne (24) de la caisse (16) de toutes les opérations qui ont été exécutées, la mémoire interne (24) de la caisse (16) étant subdivisée en espaces mémoire (32a, 32b, 32c) spécifiques, dans chacun de ces espaces mémoire étant enregistrées les opérations exécutées par un seul opérateur identifié par la lecture du code de sa carte.

3. Système selon l'une ou l'autre des revendications précédentes, **caractérisé en ce que** la carte client (11) coopère avec une boîte à jetons de base (21a) d'une façon interactive, en enregistrant les opérations comme facteur progressif.

4. Système selon l'une ou l'autre des revendications précédentes, **caractérisé en ce que** la carte client (11) coopère avec une boîte à jetons à expulsion (21b) par déchargement partiel ou total des crédits/de l'argent et réintroduction de la somme restante afin d'utiliser la machine opératrice (25).

5. Système selon l'une ou l'autre des revendications précédentes, **caractérisé en ce que** la carte client (11) coopère avec une caisse (16) pour l'initialisation de la carte (11), pour accréditer les crédits/l'argent et pour rendre la somme restante au moins en partie.

6. Système selon l'une ou l'autre des revendications précédentes, **caractérisé en ce que** la carte client (11) coopère avec un chargeur automatique (15) pour accréditer les crédits/l'argent.

7. Système selon l'une ou l'autre des revendications précédentes, **caractérisé en ce que** la carte client (11) coopère avec un chargeur automatique (15) pour changer de la monnaie.

8. Système selon l'une ou l'autre des revendications précédentes, **caractérisé en ce que** la carte contrôleur (22) coopère avec les boîtes à jetons - de base (21a) ou à expulsion (21b) - et avec la caisse (16) en soi ou à chargeur automatique (15) pour la lecture de la mémoire partielle (28) correspondante.

9. Système selon l'une ou l'autre des revendications précédentes, **caractérisé en ce que** la carte contrôleur (22) coopère avec le logiciel de fonctionnement (30) des machines opératrices (25), de la caisse (16) et du chargeur automatique (15) pour modifier directement les paramètres d'utilisation.

10. Système selon l'une ou l'autre des revendications précédentes, **caractérisé en ce que** la carte opérateur (17) coopère avec la caisse (16) pour remplir les fonctions typiques de la caisse, en opérant sur sa propre mémoire comptable (32), outre que sur la mémoire partielle (28) et sur la mémoire totale (29).

11. Système selon l'une ou l'autre des revendications précédentes, **caractérisé en ce que** la carte opérateur (17) coopère avec le chargeur automatique (15) pour prélever l'argent.

12. Système selon l'une ou l'autre des revendications précédentes, **caractérisé en ce que** la carte programmateur (27) coopère avec le logiciel de fonctionnement (30) de la caisse (16) pour la reparamétrisation des facteurs d'utilisation de la caisse (16), du chargeur automatique (15) et des machines opératrices (25).

13. Système selon l'une ou l'autre des revendications précédentes, **caractérisé en ce que** la carte programmateur (27) prélève du logiciel (30) de la caisse (16) les facteurs de reparamétrisation du chargeur automatique (15) et des boîtes à jetons (21) et intervient en reparamétrisant le logiciel de fonctionnement (30) du chargeur automatique (15) et des machines opératrices (25) par la simple insertion dans des lecteurs spécifiques (12).

14. Système selon l'une ou l'autre des revendications précédentes, **caractérisé en ce que** la carte matrice (23) coopère avec la caisse (16), le chargeur automatique (15) et les boîtes à jeton (21), en intervenant dans les mémoires comptables totales (29).

15. Système selon l'une ou l'autre des revendications précédentes, **caractérisé en ce que** la carte matrice (23) coopère avec le logiciel de fonctionnement (30) des machines opératrices (25), de la caisse (16) et du chargeur automatique (15) afin de modifier directement les paramètres d'utilisation.

16. Système selon l'une ou l'autre des revendications précédentes, **caractérisé en ce que** une carte gérant est prévue directement au-dessus de la carte opérateur (17).

17. Système selon l'une ou l'autre des revendications précédentes, **caractérisé en ce que** la carte gérant permet la visualisation des espaces mémoire comptable, partielle (28) et totale (29), toutefois sans permettre de modifier les données présentes dans ces espaces (28, 29).

18. Système selon l'une ou l'autre des revendications précédentes, **caractérisé en ce que** chaque niveau de la chaîne de distribution des machines automatiques (25) et des caisses (16) est caractérisé par une codification interne de chacune des machines automatiques (25) susdites et des cartes intelligentes de tous les niveaux, afin d'identifiquer d'une façon univoque le destinataire désigné des machines automatiques (25) susdites et des caisses (16) et de permettre l'accès à ces machines seulement au destinataire désigné susdit.
